# EUROPÄISCHE PATENTSCHRIFT

(11) **EP 1 525 412 B1**
(45) Veröffentlichungstag und Bekanntmachung des Hinweises auf die Patenterteilung: **22.02.2012**
(21) Anmeldenummer: 03784085.7
(22) Anmeldetag: 26.07.2003
(51) Int. Cl.: F16H 3/091

(54) **ANORDNUNG DES ZWISCHENRADS FÜR DEN RÜCKWÄRTSGANG FÜR EIN GETRIEBE MIT NEBENABTRIEBSBETRIEB**
INTERMEDIATE GEAR SYSTEM FOR THE REVERSE GEAR OF A GEARBOX WITH POWER TAKE-OFF
DISPOSITION D'UN PIGNON INTERMEDIAIRE UTILISE POUR LA MARCHE ARRIERE DANS UNE BOITE DE VITESSES A PRISE DE FORCE

(30) Priorität: 03.08.2002 DE 10235535
(43) Veröffentlichungstag der Anmeldung: 27.04.2005
(73) Patentinhaber: ZF FRIEDRICHSHAFEN Aktiengesellschaft, 88038 Friedrichshafen (DE)
(72) Erfinder: FÜHRER, Gerhard, 88048 Friedrichshafen (DE); LANZ, Hermann, 88699 Frickingen (DE); HÖRING, Gerhard, 88709 Hagnau (DE); STAUBER, Roland, 88048 Friedrichshafen (DE)
(86) Internationale Anmeldenummer: PCT/EP2003/008274
(87) Internationale Veröffentlichungsnummer: WO 2004/015303

(56) Entgegenhaltungen:
- EP-A- 1 172 246
- DE-A- 19 954 130
- DE-B- 1 580 101
- FR-A- 1 358 208
- GB-A- 405 200
- JP-A- 01 137 228
- US-A- 2 014 905
- US-A- 4 435 994
- LOOMAN J.: 'Zahnradgetriebe: Grundlagen, Konstruktionen, Anwendungen in Fahrzeugen', 01 Januar 1996, SPRINGER, DE, ISBN 3-540-60336-0 Seiten 263 - 264, XP009123429

## Beschreibung

Die vorliegende Erfindung betrifft eine Anordnung des Zwischenrads für den Rückwärtsgang bei einem Getriebe mit koaxialer Antriebs- und Abtriebswelle, insbesondere ein Stufenwechselgetriebe, und mit mindestens einer zusätzlichen Zwischenwelle für einen Nebenabtrieb gemäß dem Oberbegriff des Patentanspruchs 1.

Bei Stufenwechselgetrieben für Kraftfahrzeuge mit koaxialer Antriebs- und Abtriebswelle werden üblicherweise eine oder mehrere Rückwärtsgangstufen über ein sogenanntes Rückwärtsgang-Zwischenrad zur Drehrichtungsumkehr realisiert, wie es beispielsweise im Rahmen der DE 199 54 130 A1 der Anmelderin beschrieben ist. Dieses Rückwärtsgang-Zwischenrad ist an einer definierten Position im Getriebegehäuse frei drehbar gelagert und greift in der Regel in eine Laufverzahnung auf der Vorgelegewelle bzw. treibenden Welle und einer Laufverzahnung auf der Hauptwelle bzw. getriebenen Welle ein.

Alternativ kann das Rückwärtsgang-Zwischenrad auch in eine Verzahnung auf der Antriebswelle und eine Verzahnung auf der Vorgelegewelle als getriebene Welle eingreifen.

Alle heute bekannten Getriebe weisen für das Rückwärtsgang-Zwischenrad eine Position auf, welche die Lagerreaktionskräfte auf das Getriebegehäuse im Rückwärtsgang-Zugbetrieb möglichst gering halten soll und welche im Rückwärtsgang-Schubbetrieb (mit geringen Laufzeiten) in der Regel die größeren Lagerkräfte auf das Gehäuse aufweist.

Nach dem Stand der Technik ist diese Position für das Rückwärtsgang-Zwischenrad wie folgt definiert:
Wenn man eine gedachte Ebene aufspannt, die durch die Drehachsen der treibenden und der Abtriebswelle geht, und diese Ebene horizontal ausrichtet, so dass die treibende Welle in Fahrtrichtung rechts von der Abtriebswelle liegt, dann befindet sich die Vorzugsposition für das Rückwärtsgang-Zwischenrad nach dem Stand der Technik immer unterhalb dieser Ebene.

In bestimmten Fahrzeugsegmenten erfolgt nach dem Stand der Technik der Antrieb von Nebenabtrieben durch eine zusätzliche Zwischenwelle, die ebenfalls in das Rückwärtsgang-Zwischenrad eingreift. Ein Beispiel für ein derartig aufgebautes Getriebe ist die Getriebebaureihe ECOMID der Anmelderin, wie sie beispielhaft aus Looman, Zahnradgetriebe, 3. Auflage, Springer-Verlag, Seite 263, bekannt ist. Dies enthält die Merkmale des Oberbegriffs des Anspruchs 1.

Ein Nachteil der beschriebenen Position für das Rückwärtsgang-Zwischenrad nach dem Stand der Technik ist, dass sich dadurch sehr große Lagerreaktionskräfte auf das Getriebegehäuse ergeben, wenn der Nebenabtrieb angetrieben wird. Diese hohen Lagerreaktionskräfte begrenzen das maximal zulässige Drehmoment und die zu erwartende Lebensdauer für den Nebenabtriebsbetrieb. Damit entsteht ein funktioneller Nachteil gegenüber Getrieben, bei denen der Nebenabtrieb beispielsweise direkt koaxial über die Vorgelegewelle angetrieben wird, wie das bei den Baureihen ECOSPLIT und ASTRONIC der Anmelderin der Fall ist. In diesem Zusammenhang sei darauf hingewiesen, dass die geforderte Lebensdauer für den Nebenabtriebsbetrieb um ein Vielfaches höher ist, als die geforderte Lebensdauer für den Rückwärtsgang-Betrieb.

Der direkte Antrieb des Nebenabtriebes koaxial über die Vorgelegewelle ist jedoch in vielen Fällen, beispielsweise bei Mehrbereichsgruppengetrieben mit einer Nachschalt-Bereichsgruppe in Planetenbauweise nur möglich, wenn der Achsabstand zwischen Hauptwelle und Vorgelegewelle ausreichend groß ist. Ein ausreichend großer Achsabstand wiederum resultiert in entsprechend großen und schwer bauenden Getrieben mit entsprechend hohen Produktionskosten.

Der vorliegenden Erfindung liegt die Aufgabe zugrunde, eine Anordnung des Rückwärtsgang-Zwischenrades bei einem Stufenwechselgetriebe mit koaxialer Antriebs- und Abtriebswelle und mit mindestens einer zusätzlichen Zwischenwelle für einen Nebenabtrieb anzugeben, welche die Lebensdauer des Nebenabtriebs optimiert. Insbesondere sollen große Lagerreaktionskräfte auf das Getriebegehäuse bei angetriebenem Nebenabtrieb vermieden werden.

Zudem soll das maximal zulässige Drehmoment im Nebenabtriebsbetrieb erhöht werden.

Diese Aufgabe wird durch die Merkmale des Patentanspruchs 1 gelöst. Eine weitere Ausgestaltung geht aus dem Unteranspruch hervor.

Demnach wird vorgeschlagen, das Zwischenrad für den Rückwärtsgang oberhalb einer gedachten, durch die Achsen der treibenden Welle und der Abtriebswelle aufgespannten Ebene anzuordnen, wobei, bei einer gedachten horizontalen Ausrichtung der Ebene, die treibende Welle in Fahrtrichtung rechts von der Abtriebswelle liegt.

Durch die erfindungsgemäße Anordnung des Zwischenrades für den Rückwärtsgang werden im Nebenabtriebsbetrieb deutlich geringere Lagerreaktionskräfte auf das Getriebegehäuse übertragen, so dass die Lebensdauer des Nebenabtriebsbetriebs signifikant erhöht wird. Zudem können im Nebenabtriebsbetrieb höhere Drehmomente übertragen werden.

Des weiteren sind kompakte und kostenoptimierte Grundgetriebe mit kleinem Achsabstand und geringem Gewicht realisierbar, welche einen Nebenabtriebsbetrieb mit hohen zu übertragenden Momenten und großer Lebensdauer ermöglichen.

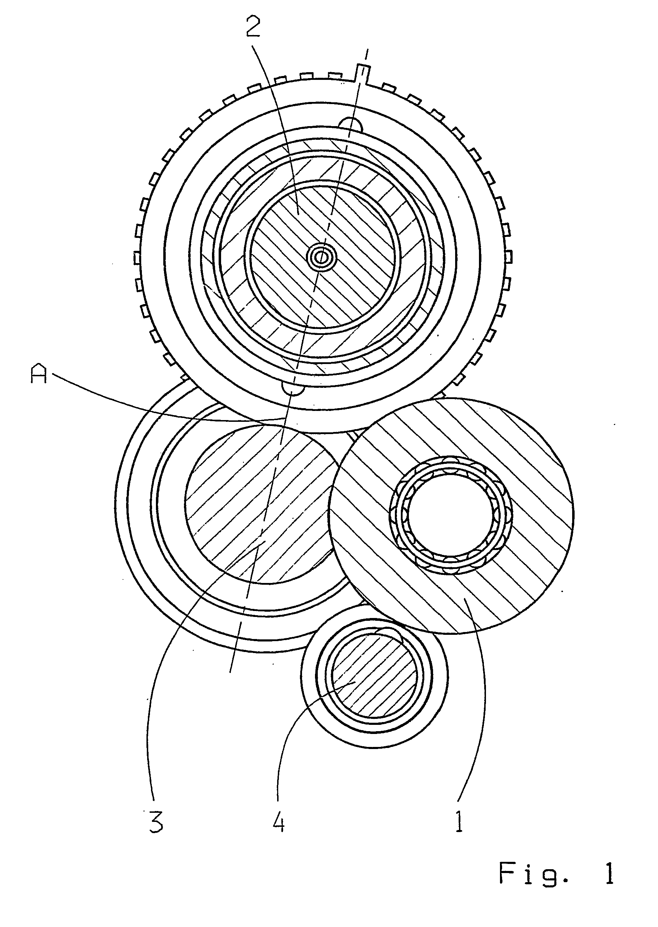

Die Erfindung wird im folgenden beispielhaft anhand der beigefügten Zeichnung, welche eine Schnittansicht einer bevorzugten Ausführungsform einer Anordnung gemäß der vorliegenden Erfindung schematisch darstellt, näher erläutert.

In der Zeichnung ist eine Schnittansicht der Anordnung des Zwischenrades für den Rückwärtsgang bei einem Grundgetriebe mit koaxialer Antriebs- und Abtriebswelle und mit mindestens einer zusätzlichen Zwischenwelle für einen Nebenabtrieb gemäß der Erfindung dargestellt. Dargestellt ist die vom Zwischenrad 1 für den Rückwärtsgang angetriebene Abtriebswelle 2 sowie eine Vorgelegewelle 3, welche das Zwischenrad 1 antreibt. Die Zwischenwelle 4 für den Nebenabtrieb greift in das Rückwärtsgang-Zwischenrad 1 ein. Die Antriebswelle ist nicht dargestellt, da sie aufgrund ihrer koaxialen Anordnung zur Abtriebswelle 2, die als Abtriebswelle des Grundgetriebes dient, im Rahmen dieser Schnittansicht in Fahrtrichtung nicht darstellbar ist.

Gemäß der Erfindung ist das Zwischenrad 1 für den Rückwärtsgang oberhalb der gedachten Ebene A angeordnet, die durch die Drehachsen der treibenden Welle 3 und der Abtriebswelle 2 aufgespannt ist. Dabei ist die Ebene A horizontal auszurichten und die treibende Welle 3 liegt in Fahrtrichtung rechts von der Abtriebswelle 2.

Durch die erfindungsgemäße Konzeption wird die Lebensdauer des Nebenabtriebsbetriebs bei höheren übertragbaren Drehmomenten signifikant erhöht; zudem werden kompakte und kostengünstige Getriebe bzw. Grundgetriebe realisiert. Es ist auch möglich, die hier vorgestellte Anordnung des Zwischenrades für den Rückwärtsgang auch bei Getrieben mit achsparallel angeordneter An- und Abtriebswelle zu übertragen.

### Bezugszeichen

- 1: Zwischenrad für den Rückwärtsgang
- 2: angetriebene Welle (Abtriebswelle)
- 3: treibende Welle (Vorgelegewelle)
- 4: Zwischenwelle für den Nebenabtrieb

- A: gedachte Ebene

## Patentansprüche

1. Anordnung eines Zwischenrads (1) für einen Rückwärtsgang bei einem Getriebe mit einer Antriebswelle und einer dazu koaxialen Abtriebswelle (2) und mit mindestens einer zusätzlichen parallel zur Antriebs- und Abtriebswelle (2) angeordneten Zwischenwelle (4) für einen Nebenabtrieb, wobei die Zwischenwelle (4) von dem Zwischenrad (1) für den Rückwärtsgang angetrieben wird und wobei das Zwischenrad (1) für den Rückwärtsgang durch eine Welle (3) angetrieben wird, die auch die Abtriebswelle (2) antreibt, **dadurch gekennzeichnet, dass** das Zwischenrad (1) für den Rückwärtsgang oberhalb einer gedachten, durch die Achsen der treibenden Welle (3) und der Abtriebswelle (2) aufgespannten Ebene (A) angeordnet ist und, bei einer gedachten horizontalen Ausrichtung der Ebene (A), die treibende Welle (3) in Fahrtrichtung rechts von der Abtriebswelle (2) liegt.

2. Anordnung des Zwischenrads (1) für den Rückwärtsgang nach Anspruch 1, **dadurch gekennzeichnet, dass** die das Zwischenrad (1) für den Rückwärtsgang treibende Welle (3) eine Vorgelegewelle ist.

## Claims

1. Arrangement of an intermediate gear (1) for a reverse gear in a transmission having a drive input shaft and having a drive output shaft (2) coaxial with respect to said drive input shaft and having at least one additional intermediate shaft (4), which is arranged parallel to the drive input shaft and drive output shaft (2), for a power takeoff, wherein the intermediate shaft (4) is driven by the intermediate gear (1) for the reverse gear, and wherein the intermediate gear (1) for the reverse gear is driven by a shaft (3) which also drives the drive output shaft (2), **characterized in that** the intermediate gear (1) for the reverse gear is arranged above an imaginary plane (A) spanned by the axes of the driving shaft (3) and of the drive output shaft (2) and, in the case of an imaginary horizontal alignment of the plane (A), the driving shaft (3) is situated to the right of the drive output shaft (2) with respect to the direction of travel.

2. Arrangement of the intermediate gear (1) for the reverse gear according to Claim 1, **characterized in that** the shaft (3) which drives the intermediate gear (1) for the reverse gear is a countershaft.

## Revendications

1. Agencement d'un pignon intermédiaire (1) utilisé pour une marche arrière dans une transmission comprenant un arbre d'entraînement et un arbre de sortie (2) coaxial à ce dernier et comprenant au moins un arbre intermédiaire (4) supplémentaire, disposé parallèlement à l'arbre d'entraînement et à l'arbre de sortie (2), pour une prise de force, l'arbre intermédiaire (4) étant entraîné par le pignon intermédiaire (1) utilisé pour la marche arrière et le pignon intermédiaire (1) utilisé pour la marche arrière étant entraîné par un arbre (3) qui entraîne également l'arbre de sortie (2), **caractérisé en ce que** le pignon intermédiaire (1) utilisé pour la marche arrière est disposé au-dessus d'un plan (A) imaginaire qui est défini par les axes de l'arbre menant (3) et de l'arbre de sortie (2), et, en cas d'orientation horizontale imaginaire du plan (A), l'arbre menant (3) se situe à droite de l'arbre de sortie (2) dans le sens de conduite.

2. Agencement du pignon intermédiaire (1) utilisé pour la marche arrière selon la revendication 1, **caractérisé en ce que** l'arbre (3) entraînant le pignon intermédiaire (1) utilisé pour la marche arrière est un arbre de renvoi.
